# EUROPÄISCHE PATENTSCHRIFT

(11) **EP 0 442 118 B1**
(45) Veröffentlichungstag und Bekanntmachung des Hinweises auf die Patenterteilung: **28.09.1994**
(21) Anmeldenummer: 90124897.1
(22) Anmeldetag: 20.12.1990
(51) Int. Cl.: B65G 51/26

(54) **Rohrpoststation**
Pneumatic tube conveyor station
Station de poste pneumatique

(30) Priorität: 14.02.1990 DE 4004509
(43) Veröffentlichungstag der Anmeldung: 21.08.1991
(73) Patentinhaber: TECHNO MARK AG, 6343 Rotkreuz (CH)
(72) Erfinder:
(74) Vertreter: Witte, Alexander, Dr.-Ing.

(56) Entgegenhaltungen:
- EP-A- 0 176 699
- DE-B- 1 801 103
- FR-A- 2 024 354

## Beschreibung

Die Erfindung betrifft eine Rohrpoststation mit einem Anschluß für ein Fahrrohr und mit einem in der Rohrpoststation bewegbaren Rohrstück, das zum Absenden oder Empfangen von Rohrpostbüchsen in einem mit dem Fahrrohr fluchtende Stellung bringbar sowie druckdicht an dieses anschließbar ist, und das zum Aufgeben oder Entnehmen von Rohrpostbüchsen in eine vom Fahrrohr beabstandete Stellung bringbar ist, wobei das Rohrstück in Fahrrichtung um mindestens die Länge L einer Rohrpostbüchse verfahrbar ist, und wobei in Fahrrichtung wirkende Haltemittel für die Rohrpostbüchse in der Asende- bzw. Empfangsposition vorgesehen sind.

Eine Rohrpoststation der eingangs genannten Art ist aus der DE-A-1 801 103 bekannt.

Bei der bekannten Rohrpoststation ist ein bewegbares Rohrstück zur Aufnahme von Rohrpostbüchsen vorgesehen, welches den gleichen Innendurchmesser wie ein Fahrrohr aufweist. Zum Be- bzw. Entladen von Rohrpostbüchsen wird das Rohrstück über ein Luftzuführungsrohr geschoben, so daß die Rohrpostbüchsen seitlich eingesetzt bzw. entnommen werden können.

Eine weitere Rohrpoststation ist aus der DE-A-3 435 500 bekannt.

Bei der bekannten Rohrpoststation ist ein Gehäuse vorgesehen, an das von oben zwei Rohrstutzen und von unten ein Rohrstutzen angeschlossen sind, wobei der von unten angeschlossene Rohrstutzen mit einem der von oben angeschlossenen Rohrstutzen fluchtet. Im Gehäuse der Rohrpoststation ist ein in horizontaler Richtung verfahrbarer Schieber angeordnet, der ein in Richtung der Rohrstutzen durchgehendes Rohrstück sowie ein geschweiftes Rohrstück aufweist. Wenn der Schieber verschoben wird, können entweder mittels des gerade durchgehenden Rohrstücks die beiden miteinander fluchtenden Rohrstutzen an der Ober- bzw. Unterseite der Station miteinander verbunden werden. Auf diese Weise kann z.B. ein Durchgang zwischen zwei Fahrrohren hergestellt werden. Wenn einer der Rohrstutzen mit einen Fahrrohr verbunden ist und der Schieber so geschaltet wird, daß ein Ende des geschweiften Rohrstücks mit den Fahrrohr fluchtet und das andere Ende über einer Prallplatte steht, kann eine Rohrpostbüchse aus dem Fahrrohr empfangen werden. Wenn andererseits das geschweifte Rohrstuck durch Verstellen des Schiebers in Flucht mit einem Rohrstutzen gebracht wird, der zum Aufgeben von Rohrpostbüchsen dient, so kann bei geeigneter Dimensionierung entweder das andere Ende des geschweiften Rohrstücks unmittelbar mit einem Fahrrohr verbunden werden oder wiederum oberhalb einer Prallplatte münden, so daß eine aufzugebende Rohrpostbüchse zunächst oberhalb der Prallplatte zwischengespeichert und dann durch erneutes Verfahren des Schiebers in ein Fahrrohr eingespeist wird.

Die bekannte Rohrpoststation ist für herkömmliche Rohrpostanlagen geeignet, bei denen leichtgewichtige Gegenstände, beispielsweise Papier-Unterlagen, Banknoten, Arzneimittel u. dgl. mittels Rohrpost befördert werden sollen.

In jüngster Zeit haben sich jedoch für die Rohrposttechnik neue Anwendungsgebiete in der sogenannten "Schwerrohrpost" eröffnet. Hierunter versteht man eine Rohrposttechnik, bei der schwergewichtige Teile, beispielsweise Maschinenelemente, Montagematerial, Werkzeuge u. dgl., in Fabrikanlagen von einem Zentrallager zu verschiedenen Arbeits- oder Montageplätzen gefördert werden. Bei der Schwerrohrpost kann das Gewicht einer einzelnen Rohrpostbüchse zwischen 10 und 20 kg oder noch darüber liegen.

Die bekannte Rohrpoststation ist für derartige Anwendungen nicht geeignet, weil beim Hantieren mit Rohrpostbüchsen von hohem Gewicht besondere Vorsichtsmaßnahmen ergriffen werden müssen, um einerseits die Gefahr von Verletzungen für den Benutzer der Rohrpostanlage und andererseits aber auch die Gefahr von Beschädigungen von Komponenten der Rohrpostanlage zu vermeiden. So ist es beispielsweise erforderlich, beim Aufgeben bzw. Entnehmen von Rohrpostbüchsen, die ein hohes Gewicht aufweisen, reproduzierbare Verhältnisse zu schaffen, damit Verletzungen von Menschen und Beschädigungen von Gerät durch unachtsames Handhaben derartiger Rohrpostbüchsen sicher vermieden werden.

Bei einer weiteren, aus der FR-A-2 024 354 bekannten Rohrpoststation ist ein Schieber vorgesehen, um Rohrpostbüchsen in die Sende- bzw. Empfangsstation seitlich ein- bzw. ausschieben zu können. Dabei werden die Rohrpostbüchsen mittels ihres oberen Fahrringes an Schienen geführt.

Der Erfindung liegt die Aufgabe Zugrunde, eine Rohrpoststation der eingangs genannten Art dahingehend weiterzubilden, daß sie auch für die Erfordernisse der Schwerrohrpost geeignet ist.

Diese Aufgabe wird erfindungsgemäß dadurch gelöst, daß bei der Rohrpoststation der eingangs genannten Art die Rohrpostbüchsen zwischen einer Aufgabe- bzw. Entnahmeposition und einer Absende- bzw. Empfangsposition in einer Richtung senkrecht zur Fahrrichtung innerhalb der Rohrpoststation verfahrbar ist, daß ein erster Schieber oberhalb der Empfangsposition vorgesehen ist, um eine abzusendende Rohrpostbüchse aus der Aufgabeposition in die Absendeposition zu bringen, daß der erste Schieber eine Rohrpostbüchse an ihrem oberen und unteren Ende auf der dem Fahrrohr abgewandten Seite seitlich abstützt und eine nach unten hin geöffnete, das obere Ende der Rohrpostbüchse von oben her übergreifende Struktur aufweist, die eine in Fahrrichtung wirksame Führung bildet, die bei einer Verschiebung quer zur Fahrrichtung ein seitliches Kippen der Rohrpostbüchse verhindert.

Erfindungsgemäß kann dann, wenn das verfahrbare Rohrstück sich in der vom Fahrrohr-Anschluß beabstandeten Position befindet, beim Aufgeben und nachfolgenden Absenden einer Rohrpostbüchse diese zwischen der Aufgabeposition und der Absendeposition mittels des Schiebers reproduzierbar verfahren werden, weil die Rohrpostbüchse dabei in kein Rohrstück einzuführen ist, sondern vielmehr in einer zur Fahrrichtung senkrechten Richtung lediglich auf die Haltemittel überführt werden muß. Entsprechendes gilt beim Überführen einer empfangenen Rohrpostbüchse in die Entnahmeposition, weil auch dann das verfahrbare Rohrstück sich in der zurückgezogenen Stellung befindet und die Rohrpostbüchse damit seitlich von allen Richtungen frei steht und durch geeignete Mittel in die Entnahmeposition überführt werden kann.

Mittels des Schiebers erfolgt der Übergang von der Aufgabeposition in die Absendeposition in reproduzierbarer Weise und daher auch mit vorausberechenbaren Kräften bzw. Belastungen. Eine Überlastung von Bauteilen ist daher ebenso wenig zu befürchten wie eine Verletzung von Benutzern der Rohrpoststation, die während des Übergabevorganges von der Aufgabeposition zur Absendestation überhaupt nicht mehr tätig sind. Weiterhin hat der Schieber den Vorteil, daß ein serielles Absenden von mehreren aufgegebenen und in der Aufgabeposition aufgepufferten Rohrpostbüchsen möglich ist, indem der Schieber nacheinander z.B. die jeweils vorderste Rohrpostbüchse in die Aufgabeposition überführt. Da der erste Schieber eine in Fahrrichtung wirksame Führung aufweist, ist dann, wenn sich die Rohrpostbüchse die Stufe zwischen Aufgabeposition und Absendeposition herunterbewegt, kein Abkippen der Rohrpostbüchse möglich, weil diese durch die in Fahrrichtung wirksame Führung solange gehalten wird, bis sie sicher auf der Absendeposition aufgesetzt hat.

Bei einer bevorzugten Ausgestaltung der Erfindung sind die Haltemittel als in Fahrrichtung angeordnete Säule ausgebildet, die in der Absende- bzw. Empfangsposition als Auflageteller ausläuft.

Diese Maßnahme hat den Vorteil, daß die Last, die beim Auftreffen einer empfangenen Rohrpostbüchse auf die Haltemittel ausgeübt wird, besonders gut abgefangen werden kann. Dies gilt insbesondere dann, wenn das Rohrstück auf die Säule zu verfahrbar ist und sich über die Säule schiebt, weil dann nämlich der Auflageteller mit der Säule stehenbleiben kann und nicht seinerseits verfahren werden muß. Es ist dann möglich, die Säule fest zu verankern, damit die erheblichen kinetischen Energien abgefangen werden können, die beim Empfang von Rohrpostbüchsen der Schwerrohrpost auftreten, insbesondere dann, wenn infolge eines Anlagenfehlers die Bremsmittel, beispielsweise die pneumatische Abbremsung der Rohrpostbüchsen, versagen sollte.

Es ist daher besonders bevorzugt, wenn die Empfangsposition, d.h. bei dem vorstehend genannten Ausführungsbeispiel die Säule, auf ihrer vom Auflageteller abgewandten Seite auf ein raumfestes Fundament abgestützt ist. Auf diese Weise ist es möglich, das Gebäude, in dem sich die Rohrpostanlage befindet, selbst als Widerlager zu benutzen.

Es ist ferner insbesondere bei diesen Ausführungsbeispielen bevorzugt, wenn die Empfangsposition einen in Fahrrichtung wirksamen Stoßdämpfer aufweist.

Diese Maßnahme hat den Vorteil, daß eine wirksame Energieumwandlung möglich ist, indem die kinetische Energie der mit hoher Geschwindigkeit ankommenden Schwerrohrpost-Büchsen im Stoßdämpfer in Wärmeenergie umgewandelt wird. Dies gilt insbesondere dann, wenn der Stoßdämpfer ein ölhydraulischer Stoßdämpfer ist.

Bei weiteren Ausführungsbeispielen der Erfindung ist, wie bereits angedeutet, das Rohrstück vom Anschluß weg in Fahrrichtung verfahrbar.

Diese Maßnahme hat den Vorteil, daß das Rohrstück von derselben Art wie das Fahrrohr sein kann, weil dann, wenn das Rohrstück vom Anschluß weg in Fahrrichtung verfahren wird, keine teleskopartige Anordnung erforderlich ist, wie dies der Fall wäre, wenn das Rohrstück in Richtung auf das Fahrrohr zu verfahren würde. Außerdem hat diese Art der Verfahrbarkeit des Rohrstücks den bereits erwähnten Vorteil, daß bei Verwendung einer Säule als Widerlager in der Empfangsposition das Rohrstück über die Säule geschoben werden kann.

Bei weiteren Ausführungsbeispielen der Erfindung ist ferner bevorzugt, eine empfangene Rohrpostbüchse mittels eines zweiten Schiebers aus der Empfangsposition in die Entnahmeposition zu bringen.

Es versteht sich, daß die erfindungsgemäße Rohrpoststation entweder als reine Absendestation oder als reine Empfangsstation oder als kombinierte Absende- und Empfangsstation ausgebildet sein kann.

Besonders bevorzugt ist ferner, wenn ein erster und ein zweiter Schieber vorgesehen sind, daß diese untereinander angeordnet sind.

Diese Maßnahme hat den vorteil, daß die mechanischen Elemente zum Antreiben der Schieber in kompakter Bauform vorgesehen werden können. Außerdem ergibt sich der Vorteil, daß die Übergabe von der Aufgabeposition in die Absendeposition einerseits und die übergabe von der Empfangsposition in die Entnahmeposition andererseits jeweils mittels Schieben, d.h. in derselben Richtung, vorgenommen werden kann, wenn sich die Aufgabeposition und die Entnahmepostion auf gegenüberliegenden Seiten der Absande- bzw. Empfangsposition befinden, was aus Platzgründen allgemein vorteilhaft sein dürfte.

Bei einem weiteren bevorzugten Ausfürungsbeispiel der Erfindung ist zum Verfahren einer abzusendenden Rohrpostbüchse aus der Aufgabeposition in die Absendeposition das Rohrstück mit seiner Oberkante in die Höhe der Aufgabeposition verfahrbar.

Diese Maßnahme hat den Vorteil, daß bei der Übergabe der Rohrpostbüchse von der Aufgabeposition in die Absendeposition nicht nur die Schwerkraft zur Unterstützung herangezogen wird, sondern zusätzlich der obere Kragen des Rohrstücks als Zentrierhelfe dient, der mit seiner Oberkante oberhalb der Haltemittel der Absendeposition angeordnet ist.

Bei weiteren Ausführungsbeispielen der Erfindung ist die Entnahmeposition auf derselben Höhe wie die Empfangsposition angeordnet. Diese Maßnahme hat den Vorteil, daß die übergabe von der Empfangsposition in die Entnahmeposition durch einfaches seitliches Verschieben vorgenommen werden kann.

Weiterhin wird eine besonders gute Wirkung nach der Erfindung dann erzielt, wenn die Aufgabe- und/oder Entnahmeposition als Rollengang zum Aufpuffern mehrerer Rohrpostbüchsen ausgebildet sind.

Diese Maßnahme hat den Vorteil, daß ein vollautomatischer Betrieb der Rohrpoststation möglich ist, indem ohne Eingriff eines Benutzers eine Mehrzahl von Rohrpostbüchsen abgefahren bzw. empfangen werden kann.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:
- Fig. 1: eine Seitenansicht, teilweise im Schnitt, eines Ausführungsbeispiels einer erfindungsgemäßen Rohrpoststation;
- Fig. 2 bis 4: in verkleinertem Maßstab schematisierte Darstellungen, ähnlich Fig. 1, für einen Absendevorgang;
- Fig. 5 bis 9: Darstellungen, ähnlich den Fig. 2 bis 4, jedoch für einen Empfangsvorgang von Rohrpostbüchsen.

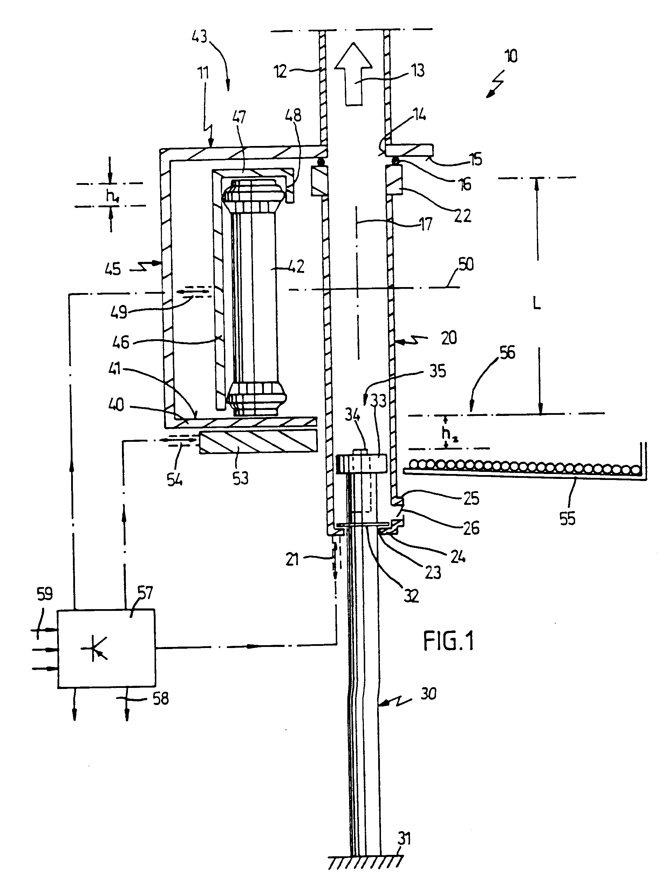

In Fig. 1 bezeichnet 10 insgesamt ein Ausführungsbeispiel einer erfindungsgemäßen Rohrpoststation. Die Rohrpoststation 10 weist ein Gehäuse 11 auf, an das vorzugsweise druckdicht ein Fahrrohr 12 nach oben angeschlossen ist. Im Fahrrohr 12 kann ein Überdruck oder ein Unterdruck in an sich bekannter Weise mit Gebläsen erzeugt werden. Bei dem in der Zeichnung dargestellten Ausführungsbeispiel wird beispielsweise mit Unterdruck gearbeitet, wie durch einen Pfeil 13 in Fig. 1 angedeutet. Es versteht sich jedoch, daß dies lediglich beispielhaft zu verstehen ist, ebenso wie die Art und Richtung des Anschlusses des Fahrrohres 12.

Das Fahrrohr 12 mündet in eine Anschlußöffnung 14 des Gehäuses 11. An der Unterseite 15 der Deckplatte des Gehäuses 11 befindet sich eine dort raumfest angeordnete Dichtung 16, beispielsweise eine O-Ring-Dichtung.

Das Fahrrohr 12 und die Flächennormale der Anschlußöffnung 14 definieren eine erste Achse 17 bzw. die Fahrrichtung von empfangenen oder abgesendeten Rohrpostbüchsen.

Ein Rohrstück 20 ist mittels einer ersten, äußerst schematisiert angedeuteten Verfahreinheit 21 in Richtung der ersten Achse 17 verfahrbar. Das Rohrstück 20 trägt an seiner Oberseite einen querschnittsvergrößerten Ringflansch 22, der bei der in Fig. 1 gezeigten Stellung druckdicht über die Dichtung 16 an der Unterseite 15 der Anschlußöffnung 14 anliegt.

Am entgegengesetzten Ende des Rohrstücks 20 findet sich eine Durchgangsbohrung 23 im Boden 24 des Rohrstücks 20. Kurz oberhalb des Bodens 24 geht seitlich ein Stutzen 25 ab, der mit einem Klappenventil 26 versehen ist. Bei dem in Fig. 1 dargestellten Ausführungsbeispiel, bei dem die Rohrpoststation 10 mit Unterdruck (Pfeil 13) arbeitet, ist das Klappenventil 26 so ausgelegt, daß es bei Unterdruck im Rohrstück 20 öffnet und bei Überdruck schließt.

Eine Säule 30 ist in Richtung der ersten Achse 17 angeordnet. Die Säule 30 ist mit ihrem unteren Ende auf einem Fundament 31, nämlich dem Gebäude abgestützt, in dem die Rohrpoststation 10 installiert ist.

Kurz unterhalb ihres oberen Endes ist die Säule 30 mit einem Dichtflansch 32 versehen, der bei der in Fig. 1 dargestellten Position des Rohrstücks 20 in Verbindung mit dem Boden 24 für eine Abdichtung der Durchgangsbohrung 23 sorgt. Zu diesem Zweck sind in der Praxis zwischen Dichtflansch 32 und Boden 24 wiederum Dichtungen vorgesehen, die jedoch in Fig. 1 der Übersichtlichkeit halber nicht nochmals dargestellt sind.

An ihrem oberen Ende läuft die Säule 30 in einen Auflageteller 33 aus, dessen Querschnitt deutlich kleiner ist als der lichte Innenquerschnitt des Rohrstücks 20, so daß Luft seitlich am Auflageteller 33 in Richtung der ersten Achse 17 vorbeistreichen kann.

In den Auflageteller 33 ist ein Stoßdämpfer 34, vorzugsweise ein ölhydraulischer Stoßdämpfer, eingelassen, der in Richtung der ersten Achse 17 wirkt. Im unbelasteten Zustand steht der Stoßdämpfer 34 etwas über die Oberfläche des Auflagetellers 33 vor, im belasteten Zustand, d.h. im Zustand maximaler Kompression, kann er bis zur Oberfläche des Auflagetellers 33 eingedrückt werden.

Die Stellung oberhalb des Auflagetellers 33 soll nachfolgend als Absende- bzw. Empfangsposition 35 bezeichnet werden, je nachdem ob die Rohrpoststation 10 zum Absenden oder zum Empfangen von Rohrpostbüchsen verwendet wird.

Das Gehäuse 11 ist auf der in Fig. 1 linken Seite mit einem Boden 40 versehen, der zugleich als Auflage 41 für abzusendende Rohrpostbüchsen 42 dient. Die Position, in der sich die Rohrpostbüchse 42 in Fig. 1 befindet, soll nachfolgend als Aufgabeposition 43 bezeichnet werden. Es versteht sich dabei, daß in einer Richtung senkrecht zur Zeichenebene der Fig. 1 weitere Rohrpostbüchsen 42 aufgepuffert werden können, um nacheinander in die Aufgabeposition 43 zu gelangen.

Innerhalb des Gehäuses 11 ist im Bereich der Aufgabeposition 43 ein erster Schieber 45 angeordnet. Der erste Schieber 45 weist eine vertikale Seitenwand 46, eine horizontale Deckwand 47 sowie ein von der Deckwand 47 nach unten abstehendes Wandstück 48 auf. Der erste Schieber 45 hat damit im wesentlichen eine nach unten geöffnete U-förmige Struktur, wobei der in Fig. 1 rechte Schenkel, nämlich das Wandstück 48, den verkürzten Schenkel bildet.

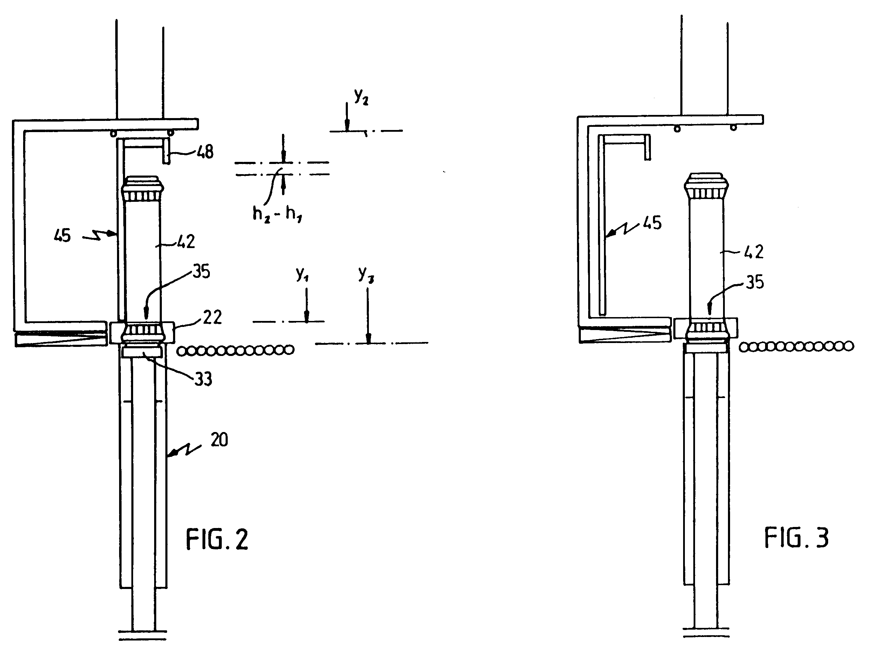

Die Dimensionierung ist dabei so getroffen, daß der vertikale Abstand h₁ zwischen der Oberseite der Rohrpostbüchse 42 und dem unteren Ende des Wandstücks 48 kleiner ist als der vertikale Abstand h₂ zwischen der Auflage 41 und der Oberfläche des Auflagetellers 33 bzw. des Stoßdämpfers 34. Der Sinn dieser Maßnahme wird weiter unten anhand von Fig. 2 noch erläutert werden.

Der erste Schieber 45 ist mittels einer ebenfalls nur äußerst schematisch angedeuteten zweiten Verfahreinheit 49 entlang einer zweiten Achse 50 verfahrbar, die auf der ersten Achse 17 im wesentlichen senkrecht steht. Wenn die erste Achse 17 vertikal verläuft, verläuft die zweite Achse 50 somit horizontal.

Da die vom ersten Schieber 45 gebildete Kontur im wesentlichen der Außenkontur einer Rohrpostbüchse 42 angepaßt ist, kann die zweite Verfahreinheit 49 eine abzusendende Rohrpostbüchse 42 in Richtung der zweiten Achse 50 durch formschlüssiges Ergreifen verfahren.

Die Seitenwand 46 kann senkrecht zur Zeichenebene der Fig. 1 nach vorne verlängert und dann nach links abgebogen sein, damit bei nach rechts verfahrenem ersten Schieber 45 ein Zugang zur Aufgabeposition 43 versperrt ist.

Unterhalb des Bodens 40 ist ein zweiter Schieber 53 zu erkennen, der mittels einer dritten Verfahreinheit 54 ebenfalls in Richtung der zweiten Achse 50 verfahrbar ist.

Auf der gegenüberliegenden Seite ist ein Rollengang 55 zu erkennen, der zur Aufnahme von empfangenen Rohrpostbüchsen dient. Demzufolge wird nachstehend mit 56 eine Entnahmeposition bezeichnet, von der empfangene Rohrpostbüchsen auf dem Rollengang 55 ergriffen und von der Rohrpoststation 10 entnommen werden können.

Ein elektronisches Steuergerät 57 dient zum Ansteuern der Verfahreinheiten 21, 49 und 54. Ferner sind Steuerausgänge 58 vorgesehen, die z.B. zum Ansteuern von Gebläsen u. dgl. dienen können. Steuereingänge 59 empfangen Steuersignale von einem Steuerrechner, von Näherungsschaltern u. dgl. mehr, wie dies an sich bekannt ist.

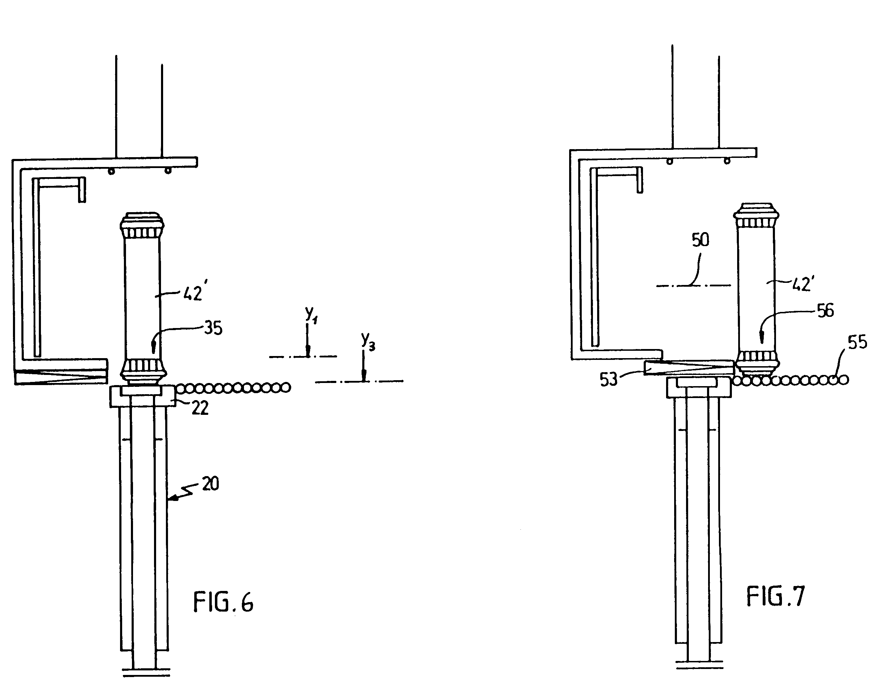

Die Wirkungsweise der Rohrpoststation 10 soll nachstehend anhand der Fig. 2 bis 4 für einen Absendevorgang und anhand der Fig. 5 bis 9 für einen Empfangsvorgang erläutert werden.

Hierzu sei zunächst nochmals von Fig. 1 ausgegangen, wo eine Rohrpostbüchse 42 in eine Richtung senkrecht zur Zeichenebene der Fig. 1 in die Aufgabeposition 43 verbracht wurde.

Durch Betätigen der ersten Verfahreinheit 21 wird nun zunächst das Rohrstück 20 aus seiner in Fig. 1 gezeigten oberen Endlage in eine untere Position verfahren, in der die Oberkante des Ringflansches 22 mit der Auflage 41 fluchtet. In Fig. 1 ist die letztgenannte Höhe mit y₁ , die obere Endlage des Rohrstücks 20 mit y₂ und die Höhe des Auflagetellers 33 mit y₃ bezeichnet.

Als nächstes wird nun durch Ansteuern der zweiten Verfahreinheit 49 der erste Schieber 45 nach rechts geschoben. Der erste Schieber 45 nimmt die Rohrpostbüchse 42 formschlüssig mit, bis diese über die rechte Kante der Auflage 41 rutscht und unter Schwerkrafteinfluß mit ihrem unteren Ende auf dem Auflageteller 33 aufsetzt. Der Ringflansch 22 dient dabei als Zentrierhilfe, weil Rohrpostbüchsen bekanntlich am oberen und unteren Ende mit Verdickungen versehen sind, die eine Abdichtung im Fahrrohr gewährleisten. Da jedoch der Dichtflansch 32 die lichte Weite des Fahrrohrs 12 aufweist, rutscht die Rohrpostbüchse 42 mit ihrem unteren Ende, und zwar mit der Verdickung am unteren Ende, formschlüssig und damit zentriert in die Absendeposition 35.

Um zu verhindern, daß die Rohrpostbüchse 42 beim Übergang von der Auflage 41 nach unten in den Ringflansch 22 an ihrem oberen Ende nach rechts in Fig. 2 wegkippt, ist als Führung in vertikaler Richtung das Wandstück 48 vorgesehen. Das Wandstück 48 verhindert ein Wegkippen des oberen Endes der Rohrpostbüchse 42 nach rechts und bewirkt damit, daß die Rohrpostbüchse 42 sauber nach unten in den Ringflansch 22 rutscht.

Wie bereits weiter oben erwähnt wurde, ist die vertikale Länge des Wandstücks 48 so bemessen, daß in der in Fig. 2 gezeigten Stellung, in der die Rohrpostbüchse 42 auf der Absendeposition 35, d.h. auf dem Auflageteller 33 aufsitzt, das obere Ende der Rohrpostbüchse 42 einen vertikalen Abstand h₂ -h₁ vom unteren Ende des Wandstücks 48 hat.

Aufgrunddessen kann, wie Fig. 3 zeigt, der erste Schieber 45 alsdann durch Betätigen der zweiten Verfahreinheit 49 wieder nach links verfahren werden, so daß der Raum oberhalb der Rohrpostbüchse 42 in der Absendeposition 35 frei ist.

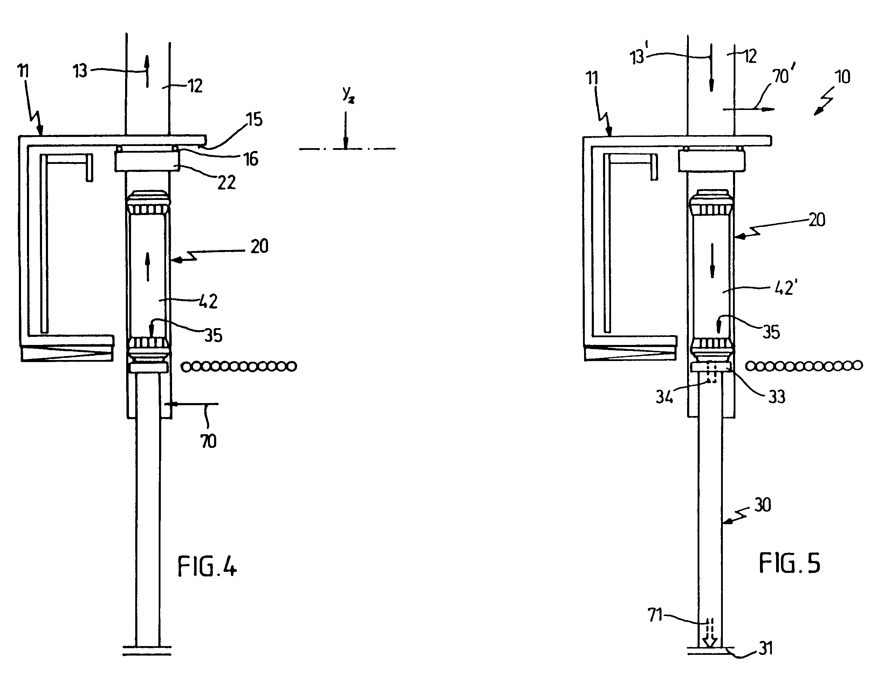

Fig. 4 zeigt nun, daß jetzt das Rohrstück 20 wieder durch Betätigen der ersten Verfahreinheit 21 nach oben verfahren wird, bis die Oberkante des Ringflansches 22 die obere Endposition y₂ erreicht. In dieser oberen Endposition liegt der Ringflansch 22 wegen der Dichtung 16 dicht an der Unterseite 15 des Gehäuses 11 an.

Wird nun über das elektronische Steuergerät 47 ein Unterdruck (Pfeil 13) im Fahrrohr 12 erzeugt, wird die Rohrpostbüchse 42 abgesaugt. Mit einem Pfeil 70 ist in Fig. 4 angedeutet, daß dabei Luft über das Klappenventil 26 und den Stutzen 25 in das Rohrstück 20 einströmen kann, um ein Abfahren der Rohrpostbüchse 42 zu ermöglichen.

Der vorstehend beschriebene Vorgang kann sich mehrfach nacheinander wiederholen, wenn mehrere Rohrpostbüchen 42 nacheinander von der Aufgabeposition 43 abgefahren werden sollen.

Fig. 5 zeigt demgegenüber die Ausgangslage für den Empfang einer Rohrpostbüchse 42'.

In dieser Ausgangslage befindet sich das Rohrstück 20 in seiner oberen Endposition. Die ankommende Rohrpostbüchse 42' fährt über das Fahrrohr 12 ein, wie mit einem Pfeil 13' angedeutet. Hierzu wird ein Überdruck im Fahrrohr 12 erzeugt. Die vor der Rohrpostbüchse 42' hergeschobene Luft kann kurz oberhalb des Gehäuses 11 durch ein in Fig. 5 nicht näher dargestelltes Ventil abströmen, wie mit einem Pfeil 70' angedeutet. Sobald die ankommende Rohrpostbüchse 42' dieses Ventil passiert hat, wird sie durch das nun vor ihr entstehende Luftpolster abgebremst, da das Klappenventil 26 am Stutzen 25, wie erwähnt, bei Überdruck im Fahrrohr 12 bzw. dem Rohrstück 20 geschlossen hat.

Die ankommende Rohrpostbüchse 42 setzt nun auf der Empfangsposition 35 auf. Sie setzt dabei zunächst auf dem Stoßdämpfer 34 auf, der infolge der restlichen kinetischen Energie der Rohrpostbüchse 42' zusammengedrückt wird. Erst nachdem die kinetische Energie ganz oder zumindest größtenteils im Stoßdämpfer 34 in Wärmeenergie umgewandelt wurde, kommt die Rohrpostbüchse 42' auf dem Auflageteller 33 zur Ruhe.

Wenn jedoch die Rohrpostbüchse 42' mit zu hoher Geschwindigkeit ankommt, beispielsweise weil das Klappenventil 26 defekt ist und sich kein abbremsendes Luftpolster vor der Rohrpostbüchse 42' gebildet hat, so schlägt diese mit hoher kinetischer Energie auf den Auflageteller 33 auf, weil der Stoßdämpfer 34 nur so dimensioniert ist, daß er die im üblichen Betrieb auftretende kinetische Energie aufzunehmen vermag.

In diesem Fehlerfall wird eine erhebliche Last von der Säule 30 abgefangen und von dort auf das Fundament 31 übertragen, wie in Fig. 5 mit einem Pfeil 71 angedeutet. Da die Anordnung der Säule 30 für solch hohe Belastungen ausgelegt ist, ist eine Beschädigung der Rohrpoststation 10 auch bei einem solchen Störfall nicht möglich.

Betrachten wir nun wieder einen regulären Empfangsvorgang, so ist die angekommene Rohrpostbüchse 42', wie erwähnt, auf dem Auflageteller 33 zur Ruhe gekommen.

Fig. 6 zeigt nun, daß als nächstes das Rohrstück 20 nach unten verfahren wird, und zwar so weit, daß die Oberkante des Ringflansches 22 sich in der Höhe der Empfangsposition 35, nämlich in der Höhe y₃, befindet. Das Rohrstück 20 steht jetzt also tiefer als in der Phase der Fig. 3 (y₁), so daß das untere Ende der Rohrpostbüchse 42' vom Ringflansch 22 nicht umgeben ist.

Fig. 7 zeigt die nächste Phase, in der der zweite Schieber 53 in Richtung der zweiten Achse 50 nach rechts verfahren wird. Der zweite Schieber 53 ergreift dabei das untere Ende der Rohrpostbüchse 42' und schiebt diese nach rechts in die Entnahmeposition 56 auf dem Rollengang 55.

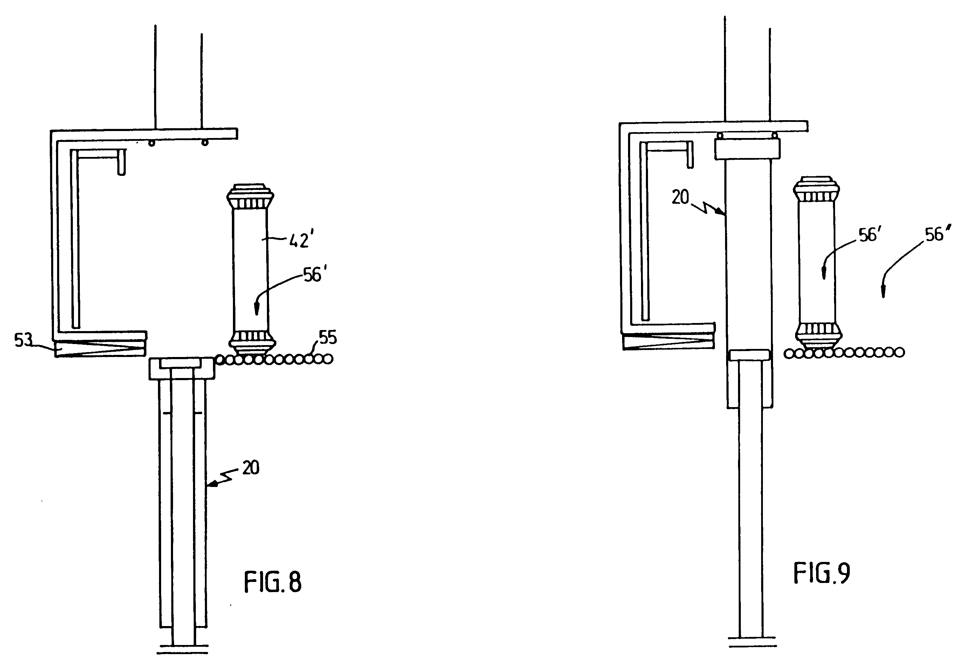

Fig. 8 zeigt, daß anschließend der zweite Schieber 53 wieder in seine Ausgangsposition zurückgefahren wurde, um den Weg für das Rohrstück 20 wieder freizugeben. Die Rohrpostbüchse 42' kann nun unter Schwerkrafteinfluß auf dem leicht geneigt angeordneten Rollengang 55 z.B. in eine zweite Entnahmeposition 56' weitergerollt sein, um Platz für eine nächste zu empfangende Rohrpostbüchse zu machen.

Fig. 9 zeigt schließlich, daß das Rohrstück 20 anschließend wieder in seine obere Endlage verfahren wird. Diese obere Endlage ist zugleich die Ruhrposition der Rohrpoststation 10. Dies geschieht deswegen, weil vermieden werden soll, daß eine fehlgeleitete Rohrpostbüchse als Irrläufer in der Rohrpoststation station 10 ankommt und dort eine Situation antrifft, bei der das Rohrstück 20 sich in einer unteren Stellung, beispielsweise der Endstellung der Fig. 8, befindet. Die irrtümlich ankommende Rohrpostbüchse wird in diesem Falle von oben aus dem Fahrrohr 12 austreten und ungeführt sowie ungebremst nach unten abstürzen, um dann entweder auf dem Auflageteller 33 oder auch daneben aufzuschlagen und dabei möglicherweise Zerstörungen anzurichten. Wenn hingegen die Rohrpoststation 10, wenn sie nicht in Funktion ist, stets in der Ruhestellung der Fig. 9 gehalten wird, kann dies nicht geschehen, weil auch eine irrtümlich ankommende Rohrpostbüchse in der beschriebenen Form abgebremst und sanft auf dem Auflageteller 33 zur Ruhe gebracht würde.

Es versteht sich, daß im Rahmen der vorliegenden Erfindung zahlreiche Varianten möglich sind, ohne den Rahmen der Erfindung zu verlassen. So gilt insbesondere, daß neben dem beschriebenen Mechanismus der Rohrpoststation 10 mit dem in Fahrrichtung 17 verfahrbaren Rohrstück 20 auch die anderen beschriebenen Elemente in Alleinstellung oder in anderen Kombinationen verwendet werden können, ohne daß dies den Rahmen der vorliegenden Erfindung sprengt. Dies gilt insbesondere für die Maßnahme, die Empfangsposition 35 am Fundament 31 des Gebäudes abzustützen, gilt ferner für die Maßnahme, in der Empfangsposition 35 einen Stoßdämpfer 34 vorzusehen und gilt schließlich auch für die Maßnahme, an der Aufgabeposition 43 und/oder der Entnahmeposition 56 Rollengänge 55 o. dgl. zum Aufpuffern von Rohrpostbüchsen 42 bzw. 42' zu verwenden, wie dies in Fig. 9 mit 56' und 56'' deutlich gezeigt ist.

## Patentansprüche

1. Rohrpoststation mit einem Anschluß (14) für ein Fahrrohr (12) und mit einem in der Rohrpoststation (10) bewegbaren Rohrstück (20), das zum Absenden oder Empfangen von Rohrpostbüchsen (42) in eine mit dem Fahrrohr fluchtende Stellung bringbar sowie druckdicht an dieses anschließbar ist, und das zum Aufgeben oder Entnehmen von Rohrpostbüchsen (42) in eine vom Fahrrohr (12) beabstandete Stellung bringbar ist, wobei das Rohrstück (20) in Fahrrichtung (17) um mindestens die Länge (L) einer Rohrpostbüchse (42) verfahrbar ist, und wobei in Fahrrichtung (17) wirkende Haltemittel (30, 33, 34) für die Rohrpostbüchse (42) in der Absende- bzw. Empfangsstation (35) vorgesehen sind, dadurch gekennzeichnet, daß die Rohrpostbüchsen (42) zwischen einer Aufgabe- bzw. Entnahmeposition (43, 56) und einer Absende- bzw. Empfangsposition (35) in einer Richtung (50) senkrecht zur Fahrrichtung (17) innerhalb der Rohrpoststation (10) verfahrbar sind, daß ein erster oberhalb der Empfangsposition (35) angeordneter Schieber (45) vorgesehen ist, um eine abzusendende Rohrpostbüchse (42) aus der Aufgabeposition (43) in die Absendeposition zu bringen, und daß der erste Schieber (45) die Rohrpostbüchse (42) an ihrem oberen und unteren Ende auf der dem Fahrrohr (12) abgewandten Seite seitlich abstützt und eine nach unten hin geöffnete, das obere Ende einer im Schieber (45) gehaltenen Rohrpostbüchse (42) von oben her übergreifende Struktur (46, 47, 48) aufweist, die eine in Fahrrichtung (17) wirksame Führung (46, 48) bildet, die bei einer Verschiebung quer zur Fahrrichtung (17) ein seitliches Kippen der Rohrpostbüchse (42) verhindert.

2. Rohrpoststation nach Anspruch 1, dadurch gekennzeichnet, daß die Haltemittel als in Fahrrichtung (17) angeordnete Säule (30) ausgebildet sind, die in der Absende- bzw. Empfangsposition (35) als Auflageteller (33) ausläuft.

3. Rohrpoststation, nach Anspruch 1 oder 2, dadurch gekennzeichnet, daß die Empfangsposition (35) auf ihrer vom Auflageteller (33) abgewandten Seite auf einem raumfesten Fundament (31) abgestützt ist.

4. Rohrpoststation, nach einem oder mehreren der Ansprüche 1 bis 3, dadurch gekennzeichnet, daß die Empfangsposition (35) einen in Fahrrichtung (17) wirksamen Stoßdämpfer (34) aufweist.

5. Rohrpoststation nach Anspruch 4, dadurch gekennzeichnet, daß der Stoßdämpfer (34) ein ölhydraulischer Stoßdämpfer ist.

6. Rohrpoststation nach einem oder mehreren der Ansprüche 1 bis 5, dadurch gekennzeichnet, daß das Rohrstück (20) vom Anschluß (14) weg in Fahrrichtung (17) verfahrbar ist.

7. Rohrpoststation nach einem oder mehreren der Ansprüche 1 bis 6, dadurch gekennzeichnet, daß eine empfangene Rohrpostbüchse (42') mittels eines zweiten Schiebers (55) aus der Empfangsposition (35) in die Entnahmeposition (56) bringbar.

8. Rohrpoststation nach einem oder mehreren der Ansprüche 1 bis 7, dadurch gekennzeichnet, daß die Schieber (45, 55) untereinander angeordnet sind.

9. Rohrpoststation nach einem oder mehreren der Ansprüche 1 bis 8, dadurch gekennzeichnet, daß zum Verfahren einer abzusendenden Rohrpostbüchse (42) aus der Aufgabeposition (43) in die Absendeposition (35) das Rohrstück (20) mit seiner Oberkante in die Höhe (y₁) der Aufgabeposition (43) verfahrbar ist.

10. Rohrpoststation nach einem oder mehreren der Ansprüche 1 bis 9, dadurch gekennzeichnet, daß die Entnahmeposition (56) auf derselben Höhe (y₃) wie die Empfangsposition (35) angeordnet ist.

11. Rohrpoststation, nach einem oder mehreren der Ansprüche 1 bis 10, dadurch gekennzeichnet, daß die Aufgabe- und/oder Empfangsposition (43, 56) als Rollengang (55) zum Aufpuffern mehrerer Rohrpostbüchsen (42', 42'') ausgebildet sind.

## Claims

1. A pneumatic conveyor comprising a connection (14) for a forwarding tube (12) and a pipe portion (20) which is movable in the pneumatic conveyor (10) and can be brought into a position in line with the forwarding tube in order to dispatch or receive a pneumatic dispatch carrier (42) and can be connected to the tube in pressure-tight manner, whereas for the purpose of posting or removing carriers (42) the pipe portion can be brought into a position remote from the forwarding tube (12), the pipe portion (20) being movable in the forwarding direction (17) by at least the length (L) of a dispatch carrier (42), and means (30, 33, 34) operative in the forwarding direction (17) being provided for holding the dispatch carrier (42) in the dispatching or receiving station (35), characterised in that the dispatch carriers (42) are movable between a posting or removal station (43, 56) and a dispatching or receiving station (35) in a direction (50) at right angles to the forwarding direction (17) inside the pneumatic conveyor (10), a first slide (45) is provided above the receiving station (35) for moving a carrier (42) for dispatch from the posting station (43) to the dispatching station, and the first slide (45) laterally abuts the carrier (42) at its top and bottom end on the side remote from the forwarding tube (12) and comprises a downwardly open structure (46, 47, 48) which extends from above over the top end of a carrier (42) held in the slide (45) and constitutes a guide (46, 48) which is operative in the forwarding direction (17) and prevents the carrier (42) from tilting sideways when moved transversely to the forwarding direction (17).

2. A pneumatic conveyor according to claim 1, characterised in that the holding means are in the form of a column (30) disposed in the forwarding direction (17) and ending in the form of a bearing plate (33) in the dispatching or receiving station (35).

3. A pneumatic conveyor according to claim 1 or 2, characterised in that the receiving station (35) on its side remote from the bearing plate (33) is mounted on a foundation (31) secured to the building.

4. A pneumatic conveyor according to one or more of claims 1 to 3, characterised in that the receiving station (35) contains a shock-absorber (34) operative in the forwarding direction (17).

5. A pneumatic conveyor according to claim 4, characterised in that the shock-absorber (34) is an oil-hydraulic shock-absorber.

6. A pneumatic conveyor according to one or more of claims 1 to 5, characterised in that the pipe portion (20) is movable away from the connection (14) in the forwarding direction (17).

7. A pneumatic conveyor according to one or more of claims 1 to 6, characterised in that on receipt, a dispatch carrier (42') can be brought by a second slide (55) from the receiving station (35) to the removal station (56).

8. A pneumatic conveyor according to one or more of claims 1 to 7, characterised in that the slides (45, 55) are disposed one under the other.

9. A pneumatic conveyor according to one or more of claims 1 to 8, characterised in that for the purpose of moving a carrier (42) for dispatch from the posting station (43) to the dispatching station (35), the top edge of the pipe portion (20) is movable to the level (y₁) of the posting station (43).

10. A pneumatic conveyor according to one or more of claims 1 to 9, characterised in that the removal station (56) is disposed at the same level (y₃) as the receiving station (35).

11. A pneumatic conveyor according to one or more of claims 1 to 10, characterised in that the posting and/or receiving station (43, 56) is in the form of a roll table (55) for holding a number of dispatch carriers (42', 42'') on buffers.

## Revendications

1. Station de poste pneumatique comportant un raccordement (14) pour un tube de transport (12) et une pièce tubulaire (20), mobile dans la station de poste pneumatique (10), qui pour l'envoi ou la réception de boîtes d'envoi (42) peut être amenée dans une position alignée avec le tube de transport et peut être raccordée à celui-ci, de manière étanche à la pression, et qui pour la dépose ou la reprise de boîtes d'envoi (42) peut être amenée dans une position éloignée du tube de transport (12), la pièce tubulaire (20) étant déplaçable, dans le sens du transport (17), d'au moins la longueur (L) d'une boîte d'envoi (42) et des moyens de retenue (30, 33, 34) pour la boîte d'envoi (42), agissant dans le sens du transport (17), étant prévus dans le poste d'envoi ou de réception (35), caractérisée en ce que les boîtes d'envoi (42) sont déplaçables entre une position de dépose ou de reprise (43, 56) et une position d'envoi ou de réception (35), dans une direction (50) perpendiculaire au sens du transport (17), à l'intérieur de la station de poste pneumatique (10), en ce qu'il est prévu un premier tiroir (45), placé au-dessus de la position de réception (35), pour amener une boîte d'envoi (42) à envoyer, de la position de dépose (43) à la position d'envoi, et en ce que le premier tiroir (45) soutient latéralement la boîte d'envoi (42) à son extrémité supérieure et son extrémité inférieure, sur le côté à l'opposé du tube de transport (12) et comporte une structure (46, 47, 48) ouverte vers le bas, passant, du dessus, sur l'extrémité supérieure d'une boîte d'envoi (42) maintenue dans le tiroir (45), laquelle structure forme un guidage (46, 48) efficace, agissant dans le sens du transport (17), qui empêche que la boîte d'envoi (42) ne bascule latéralement lors d'un déplacement transversal au sens du transport (17).

2. Station de poste pneumatique selon la revendication 1, caractérisée en ce que les moyens de retenue sont conçus sous la forme d'une colonne (30) placée dans le sens du transport (17), qui débouche dans la position d'envoi ou de réception (35) sous la forme d'un plateau de support (33).

3. Station de poste pneumatique selon les revendications 1 ou 2, caractérisée en ce que la position de réception (35) est soutenue sur son côté opposé au plateau de support (33), sur une fondation (31) stable.

4. Station de poste pneumatique selon une ou plusieurs des revendications 1 à 3, caractérisée en ce que la position de réception (35) comporte un pare-chocs (34) agissant dans le sens du transport (17).

5. Station de poste pneumatique selon la revendication 4, caractérisée en ce que le pare-chocs (34) est un amortisseur de chocs oléo-hydraulique.

6. Station de poste pneumatique selon une ou plusieurs des revendications 1 à 5, caractérisée en ce que la pièce tubulaire (20) est déplaçable à partir du raccordement (14) dans le sens du transport (17).

7. Station de poste pneumatique selon une ou plusieurs des revendications 1 à 6, caractérisée en ce qu'une boîte d'envoi (42') reçue peut être amenée dans la position de prélèvement (56) au moyen d'un second tiroir (55), à partir de la position de réception (35).

8. Station de poste pneumatique selon une ou plusieurs des revendications 1 à 7, caractérisée en ce que les tiroirs (45, 55) sont disposés l'un au-dessous de l'autre.

9. Station de poste pneumatique selon une ou plusieurs des revendications 1 à 8, caractérisée en ce que pour déplacer une boîte d'envoi (42) à envoyer depuis la position de dépose (43) jusque dans la position d'envoi (35), la pièce tubulaire (20) est déplaçable avec son bord supérieur à la hauteur (y₁) de la position de dépose (43).

10. Station de poste pneumatique selon une ou plusieurs des revendications 1 à 9, caractérisée en ce que la position de reprise (56) se trouve à la même hauteur (y₃) que la position de réception (35).

11. Station de poste pneumatique selon une ou plusieurs des revendications 1 à 10, caractérisée en ce que la position de dépose et/ou de réception (43, 56) est conçue à la manière d'un voie à rouleaux (55) pour le stockage de plusieurs boîtes d'envoi (42', 42'').
